# EUROPÄISCHE PATENTSCHRIFT

(11) **EP 3 214 230 B1**
(45) Veröffentlichungstag und Bekanntmachung des Hinweises auf die Patenterteilung: **29.04.2020**
(21) Anmeldenummer: 17158926.0
(22) Anmeldetag: 02.03.2017
(51) Int. Cl.: E03B 7/08

(54) **SYSTEM UND VERFAHREN ZUM SPÜLEN EINER TRINKWASSERINSTALLATION**
SYSTEM AND METHOD FOR FLUSHING A DRINKING WATER INSTALLATION
SYSTÈME ET PROCÉDÉ DE RINÇAGE D'UNE INSTALLATION D'EAU POTABLE

(30) Priorität: 03.03.2016 DE 102016103833
(43) Veröffentlichungstag der Anmeldung: 06.09.2017
(73) Patentinhaber: Uponor Innovation AB, 73061 Virsbo (SE)
(72) Erfinder: Bartenstein, Paul, 98663 Westhausen (DE)
(74) Vertreter: Epping - Hermann - Fischer

(56) Entgegenhaltungen:
- EP-A2- 2 166 159
- EP-A2- 2 466 019
- DE-U1-202012 102 881

## Beschreibung

Die Erfindung betrifft ein System sowie ein Verfahren zum Spülen einer Trinkwasserinstallation, welche zumindest eine Steig- oder Verteilleitung, mehrere an die Steig- oder Verteilleitung angeschlossene Zweigleitungen sowie an die Zweigleitungen angeschlossene Verbraucher und Spülstationen umfasst, wobei die Spülstationen Messmittel für die Temperaturänderung in der Zweigleitungen oder den Durchfluss durch die Zweigleitung aufweisen.

Bei einer größeren Trinkwasserinstallation, wie zum Beispiel einem mehrstöckigen Hotel, besteht stets die Gefahr, dass gewisse Zimmer über längere Zeit unbelegt sind und dadurch das Trinkwasser in diesen Leitungsabschnitten zu lange steht. Steht das Wasser längere Zeit, können sich Keime, Bakterien oder schlimmstenfalls sogar Legionellen bilden. Benutzt nach längerer Zeit ein Gast wieder die Dusche oder das Waschbecken, benützt er verunreinigtes Wasser, was zu gesundheitlichen Beeinträchtigungen führen kann. Es ist daher üblich in den Sanitärinstallationen Spülstationen vorzusehen, welche Messmittel enthalten, die feststellen, ob das Wasser länger wie zum Beispiel 72 Stunden steht. Ist dies der Fall, wird dann automatisch eine Spülung durch die Spülstation veranlasst, wodurch das Wasser in der Zweigleitung im entsprechenden Sanitärbereich wieder erneuert wird. Durch die Spülstationen ist eine zuverlässige Spülung der Zweigleitungen gewährleistet.

Trinkwasserinstallationen von größeren Gebäuden sind jedoch sehr komplex und umfassen auch Steig- oder Verteilleitungen, welche einen größeren Durchmesser wie die Zweigleitungen aufweisen. Auch in diesen Steig- oder Verteilleitungen kann es bei längerer Nichtbenutzung gewisser Gebäudeabschnitte zu stehenden oder nur minimal bewegten Wasserabschnitten kommen, wodurch sich Bakterien, Keime oder Legionellen bilden können.

Die EP 2 466 019 A2 offenbart ein Trinkwasserversorgungssystem eines Gebäudes, mit mindestens einem Hauptversorgungsstrang und mit mehreren von dem oder jedem Hauptversorgungsstrang abzweigenden Nebenversorgungssträngen, wobei von jedem Nebenversorgungsstrang mehrere Trinkwasserverbraucher abzweigen, dadurch gekennzeichnet, dass jedem Nebenversorgungsstrang im Bereich eines Beginns desselben mindestens ein Volumenstromsensor und im Bereich eines Endes desselben mindestens ein Temperatursensor und mindestens ein Ablassventil zugeordnet ist, wobei dann, wenn im Bereich eines Nebenversorgungsstrangs ein Messwert mindestens eines Temperatursensors des jeweiligen Nebenversorgungsstrangs einen zulässigen Grenzwert überschreitet oder unterschreitet und/oder ein Messwert mindestens eines Volumenstromsensors des jeweiligen Nebenversorgungsstrangs einen zulässigen Grenzwert unterschreitet, mindestens ein Ablassventil des jeweiligen Nebenversorgungsstrangs geöffnet werden kann, um Trinkwasser aus dem jeweiligen Nebenversorgungsstrang abzuleiten.

Die DE 20 2012 102 881 U1 offenbart eine Hygienespülvorrichtung für einen zumindest eine Verbrauchsstelle aufweisenden Strangabschnitt eines Wasserleitungsnetzes, umfassend: einen Hygienewassersammelbehälter zur Aufnahme einer Spülwassermenge des zumindest einen Strangabschnitts, ein in dem zumindest einen Strangabschnitt eingebundenes steuerbares Ventil, welches eine Entnahmeleitung absperrt, eine mit dem steuerbaren Ventil gekoppelte Steuervorrichtung, welche ausgebildet ist, jeweils nach vorgegebenen Zeitintervallen das zumindest eine Ventil für eine festgelegte Zeitspanne zu öffnen, so dass Spülwasser über die Entnahmeleitung aus dem zumindest einen Strangabschnitt in den Hygienewassersammelbehälter ausströmt, dadurch gekennzeichnet, dass der zumindest eine Hygienewassersammelbehälter derart mit einem WC-Spülkasten gekoppelt ist, dass ein Ablauf des Hygienewassersammelbehälters mit einem Einlauf des WC-Spülkastens verbunden ist und dass Hygienespülvorrichtung eine Sensoreinrichtung aufweist, mittels der ein Ablaufventil des Hygienewassersammelbehälters als Reaktion auf eine WC-Spülung zur Befüllung des WC-Spülkastens mit Hygienespülwasser aus dem Hygienewassersammelbehälter automatisch betätigbar ist.

Die EP 2 166 159 A2 offenbart ein Trinkwasserleitungssystem mit mindestens einem Kaltwasserstrang, der in Form einer Reihenleitung oder Ringleitung ausgeführt ist und mindestens ein als Entnahmestelle dienendes Zapfventil und einen Abgang aufweist, wobei an dem Abgang ein Spülkasten angeschlossen oder ein eine Toiletten- oder Urinalspülung auslösendes Ventil angeordnet ist, und wobei bei einer Ausführung des Kaltwasserstrangs als Reihenleitung der Spülkasten oder das eine Toiletten- oder Urinalspülung auslösende Ventil am Ende des Kaltwasserstrangs angeordnet ist oder bei einer Ausführung des Kaltwasserstrangs als Ringleitung der Spülkasten oder das eine Toiletten- oder Urinalspülung auslösende Ventil in einem die Mitte der Ringleitung umfassenden Bereich, der sich über eine Leitungslänge von 30%, vorzugsweise 20% der Ringleitungslänge erstreckt, angeordnet ist,
gekennzeichnet durch eine elektronische Steuerung, die mit einer Zeitmesseinrichtung versehen ist und über einen Sensor eine Trinkwasserentnahme aus dem Kaltwasserstrang erfasst, wobei der Sensor bei einer Trinkwasserentnahme aus dem Kaltwasserstrang die Zeitmesseinrichtung aktiviert, und wobei die elektronische Steuerung bei Überschreiten eines vorgegebenen oder vorgebbaren Zeitintervalls seit der letzten Trinkwasserentnahme das Ventil oder eine Betätigungsvorrichtung zur Auslösung einer Toiletten- bzw. Urinalspülung ansteuert.

Aufgabe der Erfindung ist es, eine Lösung vorzuschlagen, wodurch eine sichere Spülung der gesamten Trinkwasserinstallation umfassend auch die Steig- oder Verteilleitungen gewährleistet ist.

Erfindungsgemäß wird die Aufgabe gelöst durch ein System für die Spülung einer Trinkwasserinstallation umfassend
- zumindest eine Steig- oder Verteilleitung,
- mehrere an die Steig- oder Verteilleitung angeschlossene Zweigleitungen,
- an den Zweigleitungen angeschlossene Verbraucher und Spülstationen,
- wobei die Spülstationen Messmittel für die Temperaturänderung in der Zweigleitung oder den Durchfluss durch die Zweigleitung aufweisen, und/oder Messmittel MM für die Temperaturänderung oder den Durchfluss vorgesehen sind,
- eine Steuereinheit,
- wobei die Steuereinheit mittels Datenleitungen oder per Funk mit den Messmitteln verbunden ist, und
- die Steuereinheit ein Auswertemodul für die von den Messmitteln übertragenen Daten aufweist und
- das Auswertemodul eingerichtet ist, abhängig von den übertragenen Daten zu ermitteln, welche Anzahl von Spülstationen gleichzeitig gespült werden soll, um eine Spülung der Steig- oder Verteilleitungen zu erzielen.

Die Erfindung nutzt insbesondere die in den Spülstationen integrierten Messmittel und verbindet sie mittels Datenleitungen oder per Funk mit einer zentralen Steuereinheit, welche wiederum über ein Auswertemodul ermitteln kann, welche Steig- oder Verteilleitung gespült werden soll. Dadurch, dass die Messmittel in den einzelnen Spülstationen den Wasserdurchfluss erfassen, kann das Auswertemodul errechnen, in welchen Steig- oder Verteilleitungen zu wenig Wasserbewegung stattgefunden hat und somit die Gefahr besteht, dass sich Keime, Bakterien oder Legionellen bilden. Alternativ oder zusätzlich können auch unabhängig von den Spülstationen in der Trinkwasserinstallation verbaute Messmittel verwendet werden. Des Weiteren macht sich die Erfindung zunutze, dass durch gleichzeitiges Spülen von mehreren Spülstationen ein so großer Wasserdurchsatz in der Steig- oder Verteilleitung entsteht, dass die Strömung in der Steig- oder Verteilleitung turbulent wird und somit eine zuverlässige Spülung der Steigoder Verteilleitung erzielt wird.

Aufgrund des Umstandes, dass in einer Trinkwasserinstallation mehrere Steig- oder Verteilleitungen für Warmwasser und Kaltwasser vorgesehen sind, und die Steig- oder Verteilleitung einen größeren Durchmesser wie die Zweigleitungen, in welchen die Spülstationen integriert sind, aufweisen, ist in der Regel die Strömung in der Steig- oder Verteilleitung, wenn nur eine Spülstation betätigt wird, laminar, wodurch keine ausreichende Spülung in der Steigoder Verteilleitung erzielt wird. Erst durch das gleichzeitige Spülen einer gewisser Anzahl von Spülstationen wird die Strömung der Steig- oder Verteilleitung turbulent.

Günstigerweise ist jeder Spülstation eine Kennung zum Beispiel in Form einer Seriennummer zugeordnet, aufgrund welcher die Steuereinheit eindeutig erkennen kann, an welcher Zweigleitung und wo im System die Spülstation angeschlossen ist.

Gemäß einer bevorzugten Ausführungsform ist das Auswertemodul in der Steuereinheit dazu eingerichtet, eine Meldung auszugeben, welche Steig- oder Verteilleitung gespült werden soll. Dies hat den Vorteil, dass das Facility-Management lediglich darüber informiert wird, welche Steig- oder Verteilleitung gespült werden soll und den Spülvorgang für die Steig- oder Verteilleitung zu einer Zeit vornehmen kann, in welcher die Benutzer des Gebäudes nicht gestört werden. Zum Beispiel kann durch das gleichzeitige Spülen einer Vielzahl von Spülstationen der Wasserdruck im System kurzfristig absinken, wodurch insbesondere in den oberen Stockwerken kein oder nur ein verringerter Wasserdruck zur Verfügung steht, wodurch sich Benutzer zum Beispiel in einem Hotel gestört fühlen könnten. Deshalb ist es günstig, die Spülung durch das Facility-Management zu veranlassen, welches die Uhrzeit so wählen kann, dass sich möglichst wenige Benutzer des Gebäudes gestört fühlen.

Gemäß einer weiteren bevorzugten Ausführungsform umfasst die Steuereinheit ein Konfigurationsmodul, welches abhängig von der zu spülenden Steig- oder Verteilleitung die zu spülenden Spülstationen vorschlägt und über welches zumindest einer der folgenden Parameter: Spülzeit, Spüldauer, Spülung der Warmwasser- und/oder Kaltwasserleitung, und ob einmalig oder wiederholt gespült werden soll, eingestellt werden kann.

Das Konfigurationsmodul ermöglicht somit dem Facility-Management die vom Auswertemodul ausgegebene Meldung zur Spülung einer Steig- oder Verteilleitung umzusetzen, wobei gewisse Einstellungen durch die oben genannten Parameter vorgenommen werden können.

Gemäß einer alternativen Ausführungsform ist das Auswertemodul dazu eingerichtet, die Spülung der Steig- oder Verteilleitung durch gleichzeitiges Spülen der ermittelten Spülstationen automatisch zu veranlassen.

Gemäß weiteren bevorzugten Ausführungsform sind die Verbraucher in den Zweigleitungen über ein Reihen- und/oder Ringleitungssystem angeschlossen und der Anschluss der Verbraucher an das Reihen- und/oder Ringleitungssystem über sogenannte Durchschleiffittinge realisiert. Dies bewirkt nicht nur eine zuverlässige Spülung der Zweigleitungen über die Spülstationen, sondern verursacht auch bei gleichzeitiger Spülung mehrerer Spülstationen die turbulente Strömung in der Steig- oder Verteilleitung.

Die Erfindung betrifft ebenso ein Verfahren zum Spülen einer Trinkwasserinstallation umfassend
- zumindest eine Steig- oder Verteilleitung,
- mehrere an die Steig- oder Verteilleitung angeschlossene Zweigleitungen,
- an den Zweigleitungen angeschlossene Verbraucher und Spülstationen,
- wobei die Spülstationen Messmittel für die Temperaturänderung in der Zweigleitung oder den Durchfluss durch die Zweigleitungen aufweisen, und/oder Messmittel MM für die Temperaturänderung oder den Durchfluss vorgesehen sind,
- eine Steuereinheit,
- wobei die Steuereinheit mittels Datenleitungen oder per Funk mit den Messmitteln verbunden ist und die Daten über den Durchfluss durch die Zweigleitungen und/oder Steig- oder Verteilleitungen SVL erhält,
- wobei die Steuereinheit ein Auswertemodul für die von den Spülstationen übertragenen Daten aufweist und
- das Auswertemodul abhängig von den übertragenen Daten ermittelt, welche Anzahl von Spülstationen gleichzeitig gespült werden soll, um eine Spülung der Steig- oder Verteilleitung zu erzielen.

Günstigerweise gibt das Auswertemodul lediglich eine Meldung aus, welche Steig- oder Verteilleitung gespült werden soll. Vorzugsweise umfasst die Steuereinheit ein Konfigurationsmodul, welches abhängig von der zu spülenden Steig- oder Verteilleitung die zu spülende Spülstation vorschlägt und über welches die zu spülende Spülstation manuell ausgewählt werden können. Gemäß einer alternativen Ausführungsform wird die Spülung der Steig- oder Verteilleitung automatisch durch gleichzeitiges Spülen von Spülstationen durch das Auswertemodul veranlasst.

Weitere vorteilhafte Ausgestaltungen der Erfindung sind in den Unteransprüchen sowie der nachfolgenden Figurenbeschreibung offenbart.

Anhand eines in den Zeichnungen dargestellten Ausführungsbeispiels wird die Erfindung näher erläutert.

In den Zeichnungen zeigen:
- Figur 1: schematisch eine Trinkwasserinstallation mit zehn Spülstationen,
- Figur 2: schematisch die Vernetzung der Spülstationen über eine Steuereinheit,
- Figur 3: ein Konfigurationsmodul der Steuereinheit und
- Figur 4: die Ausgabe des Konfigurationsmoduls nach Festlegung der Parameter.

Nachfolgend werden figurenübergreifend Elemente mit gleicher Funktion mit den gleichen Bezugszeichen versehen und nicht separat pro Figur erläutert.

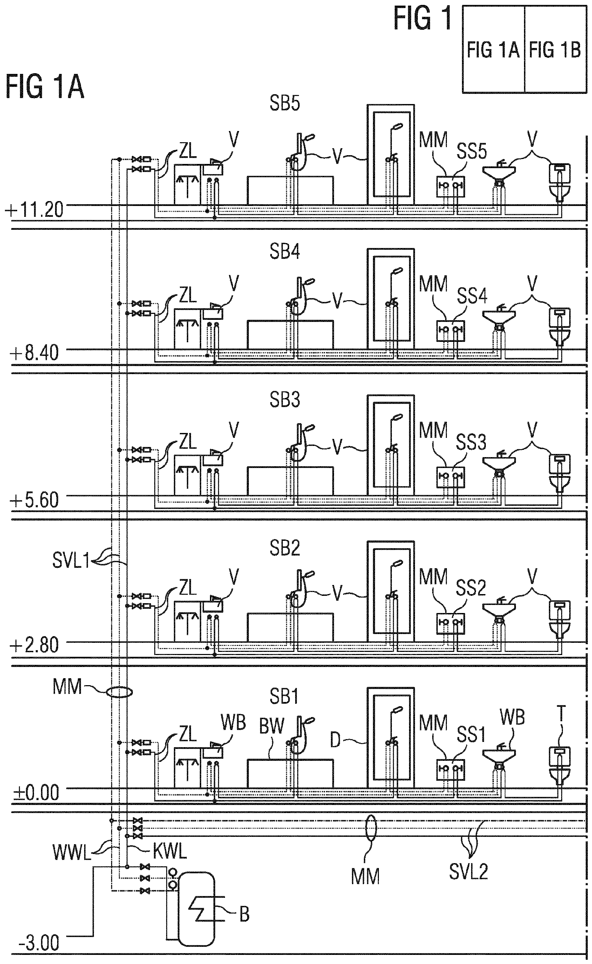

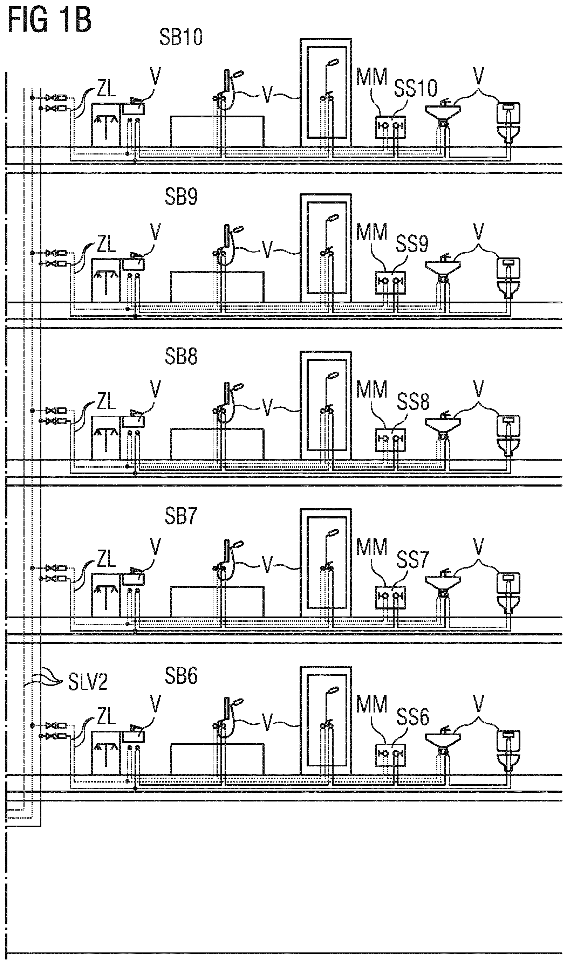

Figur 1 zeigt ein System für eine Trinkwasserinstallation mit zehn verschiedenen Sanitärbereichen SB1 bis SB10, wie sie zum Beispiel in einem Hotel verbaut sein könnte. Die Sanitärebereiche SB1 und SB6 sind im Erdgeschoss und die Sanitärbereiche SB2 bis SB5 beziehungsweise SB7 bis SB10 in den Stockwerken 1 bis 4 angeordnet. Im Keller ist ein Boiler B für die Warmwasseraufbereitung vorgesehen, wobei von dem Boiler B eine Warmwasserleitung WWL einmal zu den Sanitärbereichen SB1 bis SB10 (Vorlauf) und von diesen wieder zurück zu dem Boiler B (Rücklauf) führt. Des Weiteren ist im Keller eine Kaltwasserzuleitung KWL vorgesehen, welche ebenfalls zu den Sanitärbereichen SB1 bis SB10 führt. Die Wasserleitungen WWL und KWL die zu den Sanitärbereichen SB1 bis SB10 führen werden im Hauptstrang als Steig und Verteilleitungen SVL bezeichnet. Über die Steig- oder Verteilleitung SVL1 sind die Sanitärbereiche SB1 bis SB5 angeschlossen. Die Sanitärbereiche SB6 bis SB10 sind über die Steig- oder Verteilleitung SVL2, welche zunächst horizontal im Keller verlegt ist und dann vertikal vom Keller in den vierten Stock führt, angeschlossen. Von den Steig- oder Verteilleitungen SVL1 und SVL2 führen Zweigleitungen ZL in die jeweiligen Sanitärbereiche SB1 bis SB10. Pro Sanitärbereich SB sind mehrere Verbraucher an die Zweigleitungen ZL angeschlossen. In den dargestellten Sanitärbereichen SB1 bis SB10 sind dies ein Waschbecken WB, eine Badewanne BW, eine Dusche D, ein weiteres Waschbecken WB sowie am Ende eine Toilette T. Zwischen der Dusche D und dem Waschbecken WB ist pro Sanitärbereich SB1 bis SB10 eine Spülstation SS1 bis SS10 integriert. In den Sanitärbereichen SB2 bis SB10 sind die Verbraucher WB, BW, D und T mit V bezeichnet, da sie nur beispielhaft aufgeführt sind. Die Verbraucher V sind über ein Reihen- und/oder Ringleitungssystem an die Zweigleitungen ZL angeschlossen, das heißt sowohl die Warmwasserleitung als auch die Kaltwasserleitung sind bei jedem Verbraucher V über sogenannte Durchschleiffittinge verlegt, sodass keine toten T-Stücke entstehen, sondern bei der Bedienung der Toilette T zum Beispiel im gesamten Reihen- und/oder Ringleitungssystem der Zweigleitung ZL für das kalte Wasser dieses in der Leitung an allen Verbrauchern V vorbei bewegt wird.

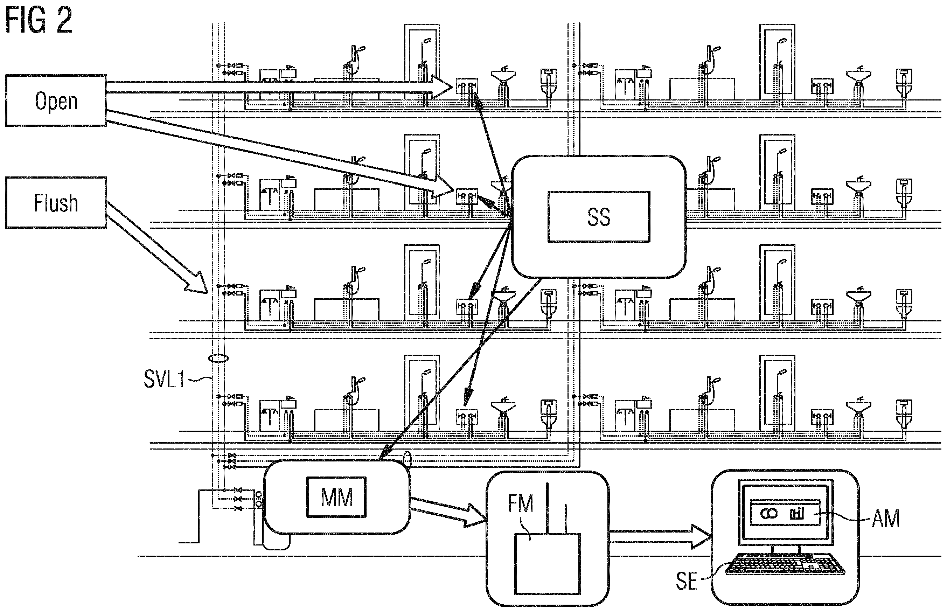

Figur 2 zeigt die Trinkwasserinstallation gemäß Figur 1, wobei die Spülstationen SS über ein Funkmodul FM mit einer Steuereinheit SE gekoppelt sind, sodass in der Steuereinheit SE die Daten gesammelt werden können, wie viel Wasser in den Zweigleitungen ZL bewegt wurde und ob eine Spülstation SS betätigt werden musste. Hierzu sind in den Spülstationen SS Messmittel MM vorgesehen, welche den Durchfluss des Trinkwassers in der Warm- sowie in der Kaltwasserleitung über Temperaturänderungen oder einen Durchflussmesser ermitteln und über das Funkmodul an die Steuereinheit SE weitergegeben werden können. Alternativ oder zusätzlich können auch unabhängig von den Spülstationen in der Trinkwasserinstallation verbaute Messmittel verwendet werden, wie z.B. Messmittel MM in den Steig- und Verteilleitungen SVL1 und SVL2. Ebenso ist es auch möglich, alle Spülstationen SS und Messmittel MM über verlegte Datenleitungen mit der Steuereinheit SE zu verbinden.

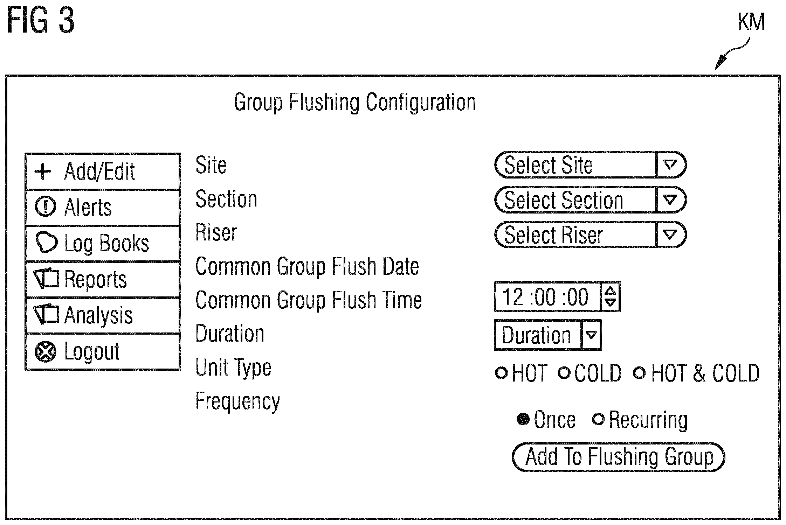

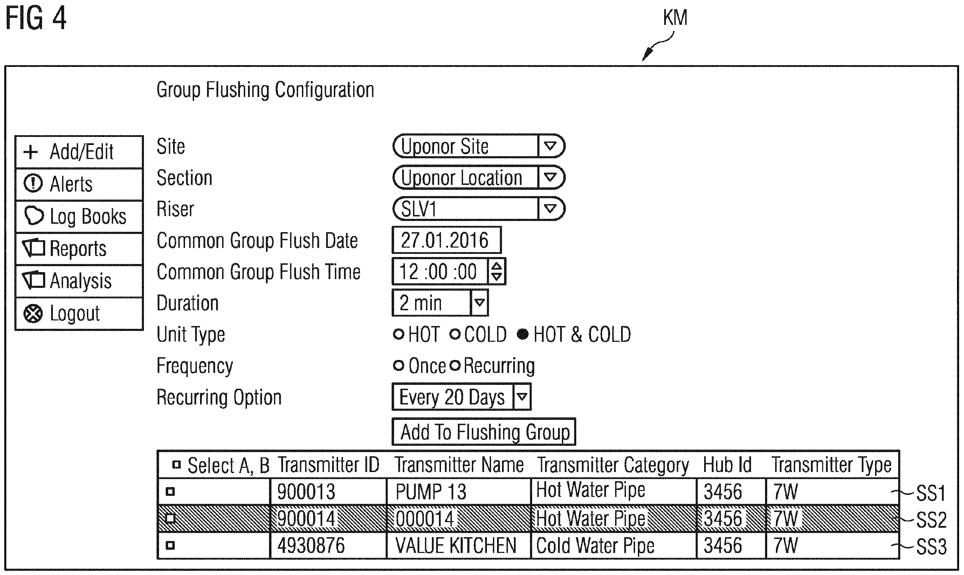

In der Steuereinheit ist ein Auswertemodul AM vorgesehen, welches aufgrund der empfangenen Daten der Messmittel MM in den Spülstationen SS ermitteln kann, ob eine Steig- oder Verteilleitung SVL wie zum Beispiel in Figur 1 die Steigoder Verteilleitung SVL1 gespült werden muss. Dies ist zum Beispiel der Fall, wenn in den Sanitärbereichen SB1 bis SB5 des Öfteren die Spülstationen SS1 bis SS5 ausgelöst wurden, weil das Wasser in den Sanitärbereichen zu lange stand. Die einzelne Betätigung einer Spülstation führt jedoch nicht zu einer turbulenten Strömung in der Steig- oder Verteilleitung SVL1, wodurch die Gefahr besteht, dass auch in der Steigoder Verteilleitung SVL1 sich Keime oder Bakterien bilden. Wird dies durch das Auswertemodul AE in der Steuereinheit SE festgestellt, gibt die Steuereinheit SE eine Meldung aus, dass eine gewisse Steig- oder Verteilleitung wie z.B. SVL1 gespült werden muss. Hierzu weist die Steuereinheit SE vorzugsweise ein Konfigurationsmodul KM auf, wie es in Figur 3 dargestellt ist. In dem Konfigurationsmodul kann unter dem Menüpunkt "Site" das Gebäude, unter dem Menüpunkt "Section" der Gebäudeabschnitt und unter dem Menüpunkt "Riser" die entsprechende Steig- oder Verteilleitung ausgewählt werden. Unter dem weiteren Menüpunkt "Common Group Flushtime" kann eingestellt werden, wann die Spülung erfolgen soll und der Menüpunkt "Duration" ermöglicht die Spülzeit einzustellen. In den Menüpunkten "Hot" "Cold" und "Hot & Cold" kann eingestellt werden, ob nur die Kaltwasserleitung, nur die Warmwasserleitung oder alle Leitungen gespült werden sollen. Der Menüpunkt "Frequency" erlaubt die Einstellung, ob die Spülung einmal oder wiederholt erfolgen soll. Erhält der Verantwortliche, in der Regel das Facility-Management, über das Auswertemodul AE die Nachricht, dass eine gewisse Steigoder Verteilleitung SVL gespült werden soll, erlaubt ihm das Konfigurationsmodul KM diese Steig- oder Verteilleitung SVL auszuwählen, woraufhin das Konfigurationsmodul KM ihm wie in Figur 4 gezeigt gewisse Anzahl Spülstationen SS, im Ausführungsbeispiel gemäß Figur drei Stück, vorschlägt, die gleichzeitig gespült werden sollten, um eine zuverlässige Spülung der Steig- oder Verteilleitung SVL1 zu erzielen. Der Vorteil der Einstellung über das Konfigurationsmodul, ist, dass das Facility-Management die eigenen Erfahrungen mit dem System mit einfließen lassen kann und über das Konfigurationsmodul KM vor allem die Spülzeit einstellen kann, sodass Besucher der Sanitärbereiche nicht gestört werden. Insbesondere bei mehrstöckigen Gebäuden kommt es bei gleichzeitiger Betätigung von vielen Spülstationen, wie zum Beispiel SS1 bis SS5, zu einem Druckabfall, sodass im Sanitärbereich SS5 kurzzeitig ein verringerter Wasserdruck oder gar kein Druck zur Verfügung stünde. Daher ist es sinnvoll, die Spülzeit so zu wählen, dass eine geringe Benutzerwahrscheinlichkeit der Sanitärbereiche vorliegt.

Alternativ kann das Auswertemodul AE auch so eingestellt werden, dass automatisch die Spülung über die Spülstationen SS veranlasst wird.

Durch die beschriebene Lösung wird die bakterielle Belastung in Trinkwasserinstallationen drastisch reduziert, ohne dass zusätzliche Einbauten erforderlich sind. Durch die intelligente Vernetzung der Spülstationen SS und durch das gleichzeitige Spülen der Spülstationen SS wird auch eine turbulente Strömung und notwendige Spülung in den Steig- oder Verteilleitungen SVL erzielt. Dies ermöglicht eine Trinkwasserinstallation gemäß der Vorschriften EN 806-5, VDI 6023 und den WHO-Richtlinien.

### Bezugszeichenliste

- KWL: Kaltwasserleitung
- B: Boiler
- WWL: Warmwasserleitung
- SVL1, SVL2: Steig- oder Verteilleitung
- ZL: Zweigleitung
- V: Verbraucher
- WB: Waschbecken
- BW: Badewanne
- D: Dusche
- T: Toilette
- SS1 bis SS10: Spülstationen
- SB1 bis SB10: Sanitärbereiche
- FM: Funkmodul
- SE: Steuereinheit
- MM: Messmittel
- AM: Auswertemodul
- KM: Konfigurationsmodul

## Patentansprüche

1. System für die Spülung einer Trinkwasserinstallation umfassend
- zumindest eine Steig- oder Verteilleitung (SVL),
- mehrere an die Steig- oder Verteilleitung (SVL) angeschlossene Zweigleitungen (ZL),
- an den Zweigleitungen (ZL) angeschlossene Verbraucher (V) und Spülstationen (SS),
- wobei die Spülstationen (SS) Messmittel (MM) für die Temperaturänderung in der Zweigleitung (ZL) oder den Durchfluss durch die Zweigleitung (ZL) aufweisen, und/oder Messmittel (MM) für die Temperaturänderung oder den Durchfluss vorgesehen sind, und
- eine Steuereinheit (SE), welche mittels Datenleitungen oder per Funk mit den Messmitteln (MM) verbunden ist,
- wobei die Steuereinheit (SE) ein Auswertemodul (AM) für die von den Messmitteln (MM) übertragenen Daten aufweist,
***dadurch gekennzeichnet, dass***
das Auswertemodul eingerichtet ist, abhängig von den übertragenen Daten zu ermitteln, welche Anzahl von Spülstationen (SS) gleichzeitig gespült werden soll, um eine Spülung der Steig- oder Verteilleitung (SVL) zu erzielen.

2. System nach Anspruch 1,
**dadurch gekennzeichnet, dass**
mehrere Steig- oder Verteilleitungen (SVL1, SVL2) für einen Vorlauf und Rücklauf einer Warmwasserleitung (WWL) und einer Kaltwasserleitung (KWL) vorgesehen sind und die Steig- oder Verteilleitungen (SVL) einen größeren Durchmesser wie die Zweigleitungen (ZL) aufweisen.

3. System nach einem der Ansprüche 1 oder 2,
**dadurch gekennzeichnet, dass**
jeder Spülstation (SS) eine Kennung (SS1 bis SS10) zugeordnet ist und aufgrund der Kennung (SS1 bis SS10) die Spülstation (SS) im System lokal zuordenbar ist.

4. System nach einem der Ansprüche 1 bis 3,
**dadurch gekennzeichnet, dass**
das Auswertemodul (AM) dazu eingerichtet ist, eine Meldung auszugeben, welche Steig- oder Verteilleitung (SVL) gespült werden soll.

5. System nach einem der Ansprüche 1 bis 4,
**dadurch gekennzeichnet, dass**
die Steuereinheit ein Konfigurationsmodul (KM) umfasst, welches abhängig von der zu spülenden Steig- oder Verteilleitung (SVL1, SVL2) die zu spülende Spülstation (SS1 bis SS10) vorschlägt und über welches zumindest einer der folgenden Parameter: Spülzeit, Spüldauer, Spülung der Warmwasser- und/oder Kaltwasserleitung und einmalige oder periodisch wiederholte Spülung einstellbar ist.

6. System nach einem der Ansprüche 1 bis 4,
**dadurch gekennzeichnet, dass**
das Auswertemodul (AM) eingerichtet ist, die Spülung der Steig- oder Verteilleitung (SVL) automatisch durch gleichzeitiges Spülung der Spülstationen (SS) zu veranlassen.

7. System nach einem der Ansprüche 1 bis 6,
**dadurch gekennzeichnet, dass**
die Verbraucher in den Zweigleitungen (ZL) über ein Reihen- und/oder Ringleitungssystem angeschlossen und der Anschluss der Verbraucher (V) über Durchschleiffittinge realisiert ist.

8. Verfahren zum Spülen einer Trinkwasserinstallation umfassend
- zumindest eine Steig- oder Verteilleitung (SVL),
- mehrere an die Steig- oder Verteilleitung (SVL) angeschlossene Zweigleitungen (ZL),
- an den Zweileitungen angeschlossene Verbraucher (V) und Spülstationen (SS),
- wobei die Spülstationen (SS) Messmittel (MM) für die Temperaturänderung in der Zweigleitung (ZL) oder den Durchfluss durch die Zweigleitungen (ZL) aufweisen, und/oder Messmittel (MM) für die Temperaturänderung oder den Durchfluss vorgesehen sind, und
- eine Steuereinheit (SE),
- wobei die Steuereinheit (SE) mittels Datenleitungen oder per Funk mit den Messmitteln (MM) verbunden ist und die Daten über den Durchfluss durch die Zweigleitungen (ZL) und/oder Steig- oder Verteilleitungen (SVL) erhält,
- wobei die Steuereinheit (SE) ein Auswertemodul (AM) für die von der Spülstation (SS) übertragenen Daten aufweist,
***dadurch gekennzeichnet, dass*** das Auswertemodul (AM) abhängig von den übertragenen Daten ermittelt, welche Anzahl von Spülstationen (SS) gleichzeitig gespült werden soll, um eine Spülung der Steig- oder Verteilleitung (SVL) zu erzielen.

9. Verfahren nach Anspruch 8,
**dadurch gekennzeichnet, dass**
das Auswertemodul (AM) eine Meldung ausgibt, welche Steig- oder Verteilleitung (SVL) gespült werden soll.

10. Verfahren nach einem der Ansprüche 8 oder 9,
**dadurch gekennzeichnet, dass**
die Steuereinheit (SE) ein Konfigurationsmodul (KM) umfasst, welches abhängig von der zu spülenden Steigoder Verteilleitung (SVL1, SVL2) die zu spülenden Spülstationen (SS) vorschlägt und über welches die spülenden Spülstationen (SS) manuell ausgewählt werden können.

11. Verfahren nach Anspruch 10,
**dadurch gekennzeichnet, dass**
über das Kommunikationsmodul (KM) zumindest einer der folgenden Parameter: Spülzeit, Spüldauer, Spülung der Warmwasser- und/oder Kaltwasserleitung und einmalige oder periodische wiederholte Spülung eingestellt werden und die Spülung durch einen Benutzer der Steuereinheit veranlasst wird.

12. Verfahren nach Anspruch 8,
**dadurch gekennzeichnet, dass**
das Auswertemodul die Spülung der Steig- oder Verteilleitung (SVL) automatisch durch gleichzeitiges Spülen mehrerer Spülstationen (SS) veranlasst.

## Claims

1. System for flushing a drinking water installation, comprising
- at least one riser or distribution pipe (SVL),
- a plurality of branch pipes (ZL) connected to the riser or distribution pipe (SVL),
- consumers (V) and flushing stations (SS) connected to the branch pipes (ZL),
- wherein the flushing stations (SS) have measuring means (MM) for the temperature change in the branch pipe (ZL) or the throughflow through the branch pipe (ZL), and/or measuring devices (MM) are provided for the temperature change or the throughflow,
- a control unit (SE) which is connected to the measuring devices (MM) by means of data cables or by radio,
- wherein the control unit (SE) has an evaluation module (AM) for the data transmitted by the measuring devices (MM),
***characterized in that***
the evaluation module is set up to determine, on the basis of the transmitted data, which flushing stations (SS) need to be flushed simultaneously in order for the riser or distribution pipe (SVL) to be flushed.

2. System according to Claim 1,
**characterized in that**
a plurality of risers or distribution pipes (SVL1, SVL2) for the feed flow and return flow of a hot water pipe (WWL) and a cold water pipe (KWL) are provided and the risers or distribution pipes (SVL) have a larger diameter than the branch pipes (ZL).

3. System according to either of Claims 1 and 2,
**characterized in that**
each flushing station (SS) is assigned an ID (SS1 to SS10) and, on the basis of the ID (SS1 to SS10), the flushing station (SS) is locally assignable in the system.

4. System according to one of Claims 1 to 3,
**characterized in that**
the evaluation module (AM) is set up to output a notification as to which riser or distribution pipe (SVL) needs to be flushed.

5. System according to one of Claims 1 to 4,
**characterized in that**
the control unit comprises a configuration module (KM) which proposes which flushing station (SS1 to SS10) is to be flushed depending on the riser or distribution pipe (SVL1, SVL2) to be flushed and via said configuration module at least one of the following parameters is settable: flushing time, flushing duration, flushing for the hot water pipe and/or cold water pipe and flushing once or in a periodically recurring manner.

6. System according to one of Claims 1 to 4,
**characterized in that**
the evaluation module (AM) is set up to initiate flushing of the riser or distribution pipe (SVL) automatically by simultaneous flushing of the flushing stations (SS).

7. System according to one of Claims 1 to 6,
**characterized in that**
the consumers are connected in the branch pipes (ZL) via a serial- and/or ring-pipe system and the connection of the consumers (V) is realized via loop fittings.

8. Method for flushing a drinking water installation, comprising
- at least one riser or distribution pipe (SVL),
- a plurality of branch pipes (ZL) connected to the riser or distribution pipe (SVL),
- consumers (V) and flushing stations (SS) connected to the branch pipes,
- wherein the flushing stations (SS) have measuring devices (MM) for the temperature change in the branch pipe (ZL) or the throughflow through the branch pipes (ZL), and/or measuring devices (MM) for the temperature change or the throughflow are provided,
- a control unit (SE),
- wherein the control unit (SE) is connected to the measuring devices (MM) by means of data cables or by radio and receives the data about the throughflow through the branch pipes (ZL) and/or risers or distribution pipes (SVL),
- wherein the control unit (SE) has an evaluation module (AM) for the data transmitted from the flushing station (SS),
***characterized in that***
- the evaluation module (AM) determines, on the basis of the transmitted data, which flushing stations (SS) need to be flushed simultaneously in order for the riser or distribution pipe (SVL) to be flushed.

9. Method according to Claim 8,
**characterized in that**
the evaluation module (AM) outputs a notification as to which riser or distribution pipe (SVL) needs to be flushed.

10. Method according to either of Claims 8 and 9,
**characterized in that**
the control unit (SE) comprises a configuration module (KM) which proposes which flushing stations (SS) are to be flushed depending on the riser or distribution pipe (SVL1, SVL2) to be flushed and via which the flushing stations (SS) to be flushed can be selected manually.

11. Method according to Claim 10,
**characterized in that**,
via the communication module (KM), at least one of the following parameters: flushing time, flushing duration, flushing for the hot water pipe and/or cold water pipe and flushing once or in a periodically recurring manner is settable and flushing is initiated by a user of the control unit.

12. Method according to Claim 8,
**characterized in that**
the evaluation module initiates flushing of the riser or distribution pipe (SVL) automatically by simultaneous flushing of a plurality of flushing stations (SS).

## Revendications

1. Système de rinçage d'une installation d'eau potable, comprenant
- au moins une conduite montante ou de distribution (SVL),
- plusieurs conduites de dérivation (ZL) raccordées à la conduite montante ou de distribution (SVL),
- des consommateurs (V) et des stations de rinçage (SS) raccordés aux conduites de dérivation (ZL),
- sachant que les stations de rinçage (SS) présentent des moyens de mesure (MM) du changement de température dans la conduite de dérivation (ZL) ou du débit passant par la conduite de dérivation (ZL), et/ou des moyens de mesure (MM) du changement de température ou du débit sont prévus, et
- une unité de commande (SE) qui est reliée aux moyens de mesure (MM) moyennant des lignes de données ou par radio,
- sachant que l'unité de commande (SE) présente un module d'évaluation (AM) pour les données transmises depuis les moyens de mesure (MM),
***caractérisé en ce que***
le module d'évaluation est configuré pour déterminer, en fonction des données transmises, quel nombre de stations de rinçage (SS) doit être rincé simultanément pour obtenir un rinçage de la conduite montante ou de distribution (SVL).

2. Système selon la revendication 1,
**caractérisé en ce que**
plusieurs conduites montantes ou de distribution (SVL1, SVL2) sont prévues pour une arrivée et un retour d'une conduite d'eau chaude (WWL) et d'une conduite d'eau froide (KWL) et les conduites montantes ou de distribution (SVL) présentent un diamètre plus grand que les conduites de dérivation (ZL).

3. Système selon l'une des revendications 1 ou 2,
**caractérisé en ce que**
un identifiant (SS1 à SS10) est assigné à chaque station de rinçage (SS), et la station de rinçage (SS) est assignable localement dans le système sur la base de l'identifiant (SS1 à SS10) .

4. Système selon l'une des revendications 1 à 3,
**caractérisé en ce que**
le module d'évaluation (AM) est configuré pour émettre un message indiquant quelle conduite montante ou de distribution (SVL) doit être rincée.

5. Système selon l'une des revendications 1 à 4,
**caractérisé en ce que**
l'unité de commande comprend un module de configuration (KM) qui propose la station de rinçage (SS1 à SS10) à rincer en fonction de la conduite montante ou de distribution (SVL1, SVL2) à rincer et via lequel au moins l'un des paramètres suivants est réglable : temps de rinçage, durée de rinçage, rinçage de la conduite d'eau chaude et/ou d'eau froide et rinçage unique ou répété périodiquement.

6. Système selon l'une des revendications 1 à 4,
**caractérisé en ce que**
le module d'évaluation (AM) est configuré pour déclencher automatiquement le rinçage de la conduite montante ou de distribution (SVL) par rinçage simultané des stations de rinçage (SS).

7. Système selon l'une des revendications 1 à 6,
**caractérisé en ce que**
les consommateurs dans les conduites de dérivation (ZL) sont raccordés via un système de conduites en ligne ou en anneau et le raccordement des consommateurs (V) est réalisé via des raccords de bouclage.

8. Procédé de rinçage d'une installation d'eau potable, comprenant
- au moins une conduite montante ou de distribution (SVL),
- plusieurs conduites de dérivation (ZL) raccordées à la conduite montante ou de distribution (SVL),
- des consommateurs (V) et des stations de rinçage (SS) raccordés aux conduites de dérivation (ZL),
- sachant que les stations de rinçage (SS) présentent des moyens de mesure (MM) du changement de température dans la conduite de dérivation (ZL) ou du débit passant par les conduites de dérivation (ZL), et/ou des moyens de mesure (MM) du changement de température ou du débit sont prévus, et
- une unité de commande (SE),
- sachant que l'unité de commande (SE) est reliée aux moyens de mesure (MM) moyennant des lignes de données ou par radio et reçoit les données relatives au débit passant par les conduites de dérivation (ZL) et/ou les conduites montantes ou de distribution (SVL),
- sachant que l'unité de commande (SE) présente un module d'évaluation (AM) pour les données transmises depuis la station de rinçage (SS),
***caractérisé en ce que***
le module d'évaluation (AM) détermine, en fonction des données transmises, quel nombre de stations de rinçage (SS) doit être rincé simultanément pour obtenir un rinçage de la conduite montante ou de distribution (SVL).

9. Procédé selon la revendication 8,
**caractérisé en ce que**
le module d'évaluation (AM) émet un message indiquant quelle conduite montante ou de distribution (SVL) doit être rincée.

10. Procédé selon l'une des revendications 8 ou 9,
**caractérisé en ce que**
l'unité de commande (SE) comprend un module de configuration (KM) qui propose les stations de rinçage (SS) à rincer en fonction de la conduite montante ou de distribution (SVL1, SVL2) à rincer et via lequel les stations de rinçage (SS) à rincer peuvent être sélectionnées manuellement.

11. Procédé selon la revendication 10,
**caractérisé en ce que**
via le module de communication (KM), au moins l'un des paramètres suivants : temps de rinçage, durée de rinçage, rinçage de la conduite d'eau chaude et/ou d'eau froide et rinçage unique ou répété périodiquement peut être réglé et le rinçage est déclenché par un utilisateur de l'unité de commande.

12. Procédé selon la revendication 8,
**caractérisé en ce que**
le module d'évaluation déclenche automatiquement le rinçage de la conduite montante ou de distribution (SVL) par rinçage simultané de plusieurs stations de rinçage (SS).
